Europäisches Patentamt

European Patent Office

Office européen des brevets

(19)

(11) Publication number: **0 015 640**
A1

(12) **EUROPEAN PATENT APPLICATION**

(21) Application number: **80300209.6**

(22) Date of filing: **22.01.80**

(51) Int. Cl.³: **G 01 M 1/32,** F 16 F 15/32

(30) Priority: **31.01.79 GB 7903467**

(43) Date of publication of application: **17.09.80**
**Bulletin 80/19**

(84) Designated Contracting States: **AT BE DE FR IT LU NL SE**

(71) Applicant: **GKN Group Services Limited, Group Head Office P.O. Box 55, Smethwick Warley West Midlands B66 2RZ (GB)**

(72) Inventor: **Harris, Leighton Richard, 43 Lawrence Weston Road, Bristol 11 (GB)**
Inventor: **Houghton, Raymond Charles, 10 Silverlow Road, Nailsea Bristol (GB)**

(74) Representative: **Robertson, Bernard Collett et al, Guest, Keen & Nettlefolds Limited Group Head Office P.O. Box 55, Smethwick, Warley West Midlands B66 2RZ (GB)**

(54) **A balance weight and a method of balancing rotary shafts.**

(57) A method of balancing a rotary shaft by applying a balance weight temporarily thereto by a first adhesive means, e.g. an adhesive tape (13), and subsequently heating the balance weight to activate a second, permanent, adhesive provided on the surface of the balance weight applied to the shaft. Checking of shaft balance is permitted while the weight is temporarily attached, before it is permanently fixed.

EP 0015640 A1

TITLE MODIFIED
see front page

78.181/GMD          Balancing of Shafts

This invention relates to the balancing of rotary shafts. The invention has been developed in relation to transmission shafts of the type usually referred to as propeller shafts, for motor vehicles, and is particularly, although not exclusively, applicable to the balancing of shafts made of a fibre reinforced resin composite material.

Hitherto, motor vehicle transmission shafts have usually been made of steel tube with appropriate torque transmitting end fittings, e.g. universal joints, secured thereto, and the procedure for balancing such a shaft has been to place it in a balancing machine in which the shaft is rotated so that a reading can be obtained of the magnitude and position of extra weight needed to be applied to the shaft to balance it, an appropriate balancing weight or weights then being spot welded to the shaft. Such a method of attachment is not possible in the case of a composite shaft as it is not a material which can be welded.

It is the object of the present invention to provide for balancing of a shaft which is of composite or other material which cannot be readily welded, although it will be appreciated that the invention is also applicable to shafts of steel or other easily weldable material.

According to one aspect of the present invention, we provide a balance weight for application to a rotary shaft, comprising a weight element having a surface shaped to conform to the surface of a shaft to which it is to be applied, a first adhesive means for securing the weight element temporarily to the shaft, and a second adhesive means provided on said surface of the weight element and capable of being activated on subjection thereof to suitable treatment permanently to secure the weight element to the shaft.

The first adhesive means preferably comprises an adhesive tape which adheres to the material of the shaft on contact therewith. There is then preferably provided a removable protective layer for said tape for preventing the latter from adhering before it is required.

The second adhesive means may comprise a substance capable of being caused to adhere to the shaft surface upon the application of heat, and typically may thus be a thermo-setting adhesive which is caused to adhere by chemical reaction when heated, or a "hot melt" adhesive.

Heat may be applied to the balance weight by the contact of a hot element therewith.

According to a further aspect of the invention, we provide a method of balancing a rotary shaft, comprising rotating the shaft in a balancing machine and obtaining a reading of corrective weight needed to be applied to the shaft to balance same, applying an appropriate weight or weights to the shaft and holding it or them in position temporarily by first adhesive means, again rotating the shaft to check the balance thereof, and subjecting the weight or weights to treatment to activate second adhesive means associated therewith and permanently to secure the weight or weights to the shaft.

The invention will now be described by way of example with reference to the accompanying drawings, of which

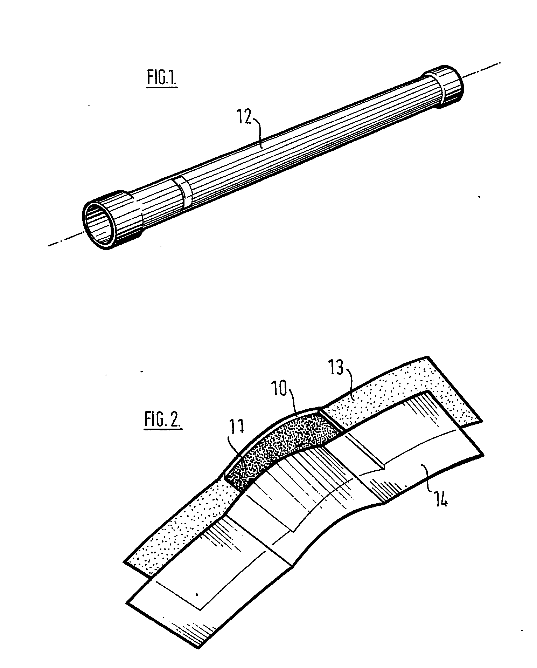

FIGURE 1 illustrates the application of a weight according to the invention to a shaft

FIGURE 2 is an exploded perspective view of the balance weight

3

Referring to the drawings, there is illustrated a balance weight which comprises a weight element 10 which is a rectangular piece of sheet metal, e.g. steel, with an arcuate cross-sectional shape to conform generally to the external surface of a shaft to which the weight is to be applied. It does not have to conform exactly to the curvature of the shaft surface, but merely be of approximately the correct curvature. The concave surface of the weight element 10 is provided with a layer 11 of heat sensitive adhesive of a type which can be activated by heating, e.g. a thermo-plastic (hot melt) adhesive, or a thermo-setting adhesive. The layer 11 is relatively thick to allow for any surface roughness of the shaft (12) to which the weight is to be applied, and may incorporate or be a foam substance, e.g. a flexible plastics foam, as a means of providing a relatively thick adhesive layer.

The balance weight is further provided with an adhesive means for temporarily securing the weight element to the shaft, in the form of an adhesive tape 13 which extends over the back of the weight element 10, and has an adhesive layer which adheres on contact with the shaft. The tape 13 may be a metal foil. A protective backing strip 14 is provided for preventing the tape 13 from adhering to anything until it is required to do so, the strip 14 being treated so as only to adhere lightly to the adhesive tape 13.

In order to balance a rotary shaft by use of a balance weight as above described, the shaft 12 is first rotated in a balancing machine and a reading obtained of the magnitude and position of weight needed to be applied to the shaft to balance it. A suitable weight or weights would then be selected from a range of different sizes of weight, and such weights temporarily applied to the shaft by use of adhesive tape 13 having removed protective strip 14. The shaft would then again be rotated to check that it is in the desired state of balance. If it is satisfactory, the weights would

4

be permanently secured to the shaft by application of heated elements to the weights, or by other heating means, to activate their adhesive layers 11. If balance is not satisfactory, the weights can be removed, re-positioned, and the balance of the shaft again tested before the weights are permanently fixed to the shaft by use of the heat sensitive adhesive thereon.

The adhesive tape 13 associated with each weight can be left in position, or removed if desired.

In possible modifications of the invention, the adhesive layer 11 could be activated by a method other than heating, e.g. irradiation, or the adhesive tape could be of a substance other than a metal foil, e.g. paper or plastics provided that it does not degrade under the treatment to cause the main adhesive to operate.

Further, although the invention can with particular advantage be applied to balancing of fibre-resin composite shafts, the method could also be used to secure balance weights to aluminium or steel shafts. Clearly the type of adhesive used in the layer 11 would be selected so as to ensure satisfactory permanent adhesive to the material of which the shaft is made. A wide range of suitable adhesives is commercially available.

CLAIMS

1. A balance weight for application to a rotary shaft, comprising a weight element having a surface shaped substantially to conform to the surface of a shaft to which it is to be applied, a first adhesive means for securing the weight element temporarily to the shaft, and second adhesive means on said surface of the weight element and capable of being activated on subjection of the weight element to suitable treatment permanently to secure the weight element to the shaft.

2. A balance weight according to claim 1 wherein the first adhesive means comprises an adhesive tape.

3. A balance weight according to claim 1 wherein said second adhesive means comprises an adhesive which is sensitive to heat.

4. A balance weight according to claim 1 wherein said second adhesive means comprises a relatively thick layer on said weight element surface for accommodating slight disconformity between said surface and said shaft surface.

5. A method of balancing a rotary shaft, comprising rotating a shaft in a balancing machine and obtaining a reading of corrective weight needed to be applied to the shaft to balance same, applying at least one appropriate weight to the shaft and holding said at least one weight in position temporarily by first adhesive means, again rotating the shaft to check the balance thereof, and subjecting said least one weight to treatment to activate a second adhesive means associated therewith and permanently to secure the weight or weights to the shaft.

6

6.   A method according to claim 5 wherein said second adhesive means is sensitive to heat, and said treatment comprises contacting the weight or weights with a heated element.

FIG.1.

12

FIG. 2.

10

13

11

14

0015640

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| . | US - A - 3 682 017 (J. MAYER)<br>* whole document *<br>-- | 1 | G 01 M   1/32<br>F 16 F   15/32 |
| P | DE - U1 - 7 920 660 (GEBR. HOFMANN)<br>* whole document * <br>-- | 1 | |
| P | US - A - 4 170 896 (G.J. KORKOSZ)<br>* whole document *<br>-- | 1,5 | **TECHNICAL FIELDS SEARCHED (Int.Cl.3)** |
| | US - A - 3 939 020 (A. CARAMANIAN et al.)<br>* whole document *<br>-- | 1,5 | F 16 F   15/28<br>F 16 F   15/32<br>G 01 M   1/00 |
| | US - A - 4 083 735 (J.A. CARAMANIAN)<br>* whole document *<br>----- | 1,5 | |

CATEGORY OF CITED DOCUMENTS

X: particularly-relevant
A: technological background
O: non-written disclosure
P: intermediate document
T: theory or principle underlying
 the invention
E: conflicting application
D: document cited in the
 application
L: citation for other reasons

&: member of the same patent
 family,
 corresponding document

X The present search report has been drawn up for all claims

| Place of search | Date of completion of the search | Examiner |
|---|---|---|
| Berlin | 04-06-1980 | KÖHN |

EPO Form 1503.1  06.78